# EUROPEAN PATENT APPLICATION

(11) **EP 4 135 234 A1**
(43) Date of publication of application: **15.02.2023**
(21) Application number: 21785668.1
(22) Date of filing: 01.04.2021
(51) Int. Cl.: H04L 1/16, H04L 1/18, H04L 1/00

(54) **ELECTRONIC DEVICE FOR RETRANSMITTING PACKETS ON BASIS OF STATE OF NETWORK AND OPERATION METHOD THEREOF**

(30) Priority: 06.04.2020 KR 20200041534
(71) Applicant: Samsung Electronics Co., Ltd., Gyeonggi-do 16677 (KR)
(72) Inventor: KIM, Songkyu, Suwon-si, Gyeonggi-do 16677 (KR); KIM, Suhan, Suwon-si, Gyeonggi-do 16677 (KR); BAEK, Junga, Suwon-si, Gyeonggi-do 16677 (KR); KIM, Yongtae, Suwon-si, Gyeonggi-do 16677 (KR); KIM, Yonghyon, Suwon-si, Gyeonggi-do 16677 (KR); JEE, Jeongwun, Suwon-si, Gyeonggi-do 16677 (KR)
(74) Representative: Arnold & Siedsma
(86) International application number: PCT/KR2021/004091
(87) International publication number: WO 2021/206370

(57) **Abstract**

In an electronic device and an operation method thereof according to various embodiments, the electronic device may comprise: a media processing unit for generating packets; and a communication processor comprising a user plane protocol for transmitting the packets to an external electronic device, wherein the communication processor is configured to: in response to determining a failure in transmitting at least some of the packets by using the user plane protocol, check state information of a network used to retransmit the at least some packets; determine, on the basis of the state information of the network, whether to retransmit the at least some packets; and control, on the basis of whether to retransmit the packets, the media processing unit to generate the packets to be retransmitted. Various other embodiments are possible.

## Description

### [Technical Field]

Various embodiments of the disclosure relate to an electronic device and an operation method of an electronic device and to an electronic device configured to retransmit a packet.

### [Background Art]

Various electronic devices such as a smartphone, a tablet PC, a portable multimedia player (PMP), a personal digital assistant (PDA), a laptop personal computer (PC), and a wearable device have been distributed.

The electronic device may implement various services by exchanging packets with an external electronic device. In connection with performing voice call or video call with an external electronic device, the voice call or video call may be implemented by converting voice data or image data of a user into a packet form and transmitting the packet to the external electronic device.

The electronic device may fail in transmitting some packets of packets due to various causes. The electronic device may improve a data transfer rate by retransmitting packets that have failed to be transmitted to the external electronic device in response to identifying of a failure in transmitting some packets.

### [Disclosure of Invention]

### [Technical Problem]

In case of providing services that require relatively low latency, an electronic device implements retransmission using a retransmission scheme (e.g., an un-acknowledge mode (UM mode)) with a relatively low latency not supporting some retransmission schemes (e.g., an acknowledge mode (AM mode) or a hybrid auto repeat request (ARQ)) with a relatively high latency among transmission schemes implemented in a communication processor.

In connection with retransmission of packets having failed to be transmitted, a situation where some retransmission schemes cannot be used to implement low latency may reduce a success rate of data packet transmission in case that retransmission using the other schemes fails.

Furthermore, a data packet transmission scheme not considering performance of an electronic device configured to receive a packet may not increase a success rate of data packet transmission in case that the electronic device configured to receive a packet fails to receive the packet.

### [Solution to Problem]

An electronic device according to various embodiments of the disclosure may include a media processing unit configured to generate packets and a communication processor including a user plane protocol configured to transmit the packets to an external electronic device, wherein the communication processor is configured to, in response to identifying of a failure in transmitting at least some of the packets by using the user plane protocol, identify state information of a network used to retransmit the at least some packets, based on the state information of the network, determine whether to retransmit the at least some packets, and based on whether to retransmit the packets, control the media processing unit to generate the packets to be retransmitted.

An operation method of an electronic device according to various embodiments of the disclosure may include: in responses to identifying a failure in transmitting at least some of the packets among packets generated by a media processing unit implemented in a communication processor to an external electronic device, an operation of identifying state information of a network used to retransmit the at least some packets; based on the state information of the network, an operation of determining whether to retransmit the at least some packets; based on whether to retransmit the packets, an operation of generating the packets to be retransmitted; and an operation of retransmitting the generated packets.

### [Advantageous Effects of Invention]

The electronic device and the operation method of an electronic device according to various embodiments of the disclosure may increase the number of retransmissions of packets having failed to be transmitted, thereby increasing a success rate of data transmission.

In the electronic device and the operation method of an electronic device according to various embodiments of the disclosure, a media processing engine may determine whether to retransmit based on a state of a network and perform retransmission in case that it is changed to a situation with a high possibility of success of retransmission of data or possibility of receiving data from an external electronic device, thereby increasing a success rate of data transmission.

The electronic device and the operation method of an electronic device according to various embodiments of the disclosure may determine (or predict) a buffer size of an external electronic device which temporarily stores packets, based on a state of a network and determine whether to retransmit in consideration of a size of a buffer and a size of a packet to be retransmitted. Therefore, the external electronic device may receive the packet to be retransmitted in a state in which a buffer of the external electronic device has a size enough to store the packet to be retransmitted, thereby reducing interruption of media output which may be caused by not receiving some packets.

### [Brief Description of Drawings]

FIG. 1 is a block diagram of an electronic device according to various embodiments of the disclosure.
FIG. 2 is a block diagram of an audio module according to various embodiments.
FIG. 3 is a block diagram illustrating an electronic device according to various embodiments of the disclosure.
FIG. 4 is a block diagram illustrating a media processing unit according to various embodiments of the disclosure.
FIG. 5A, FIG. 5B, FIG. 5C, and FIG. 5D are views illustrating media processing using a buffer according to various embodiments of the disclosure.
FIG. 6 is an operation flowchart illustrating an operation method of an electronic device according to various embodiments of the disclosure.
FIG. 7 is an operation flowchart illustrating an operation method of an electronic device according to various embodiments of the disclosure.

### [Mode for the Invention]

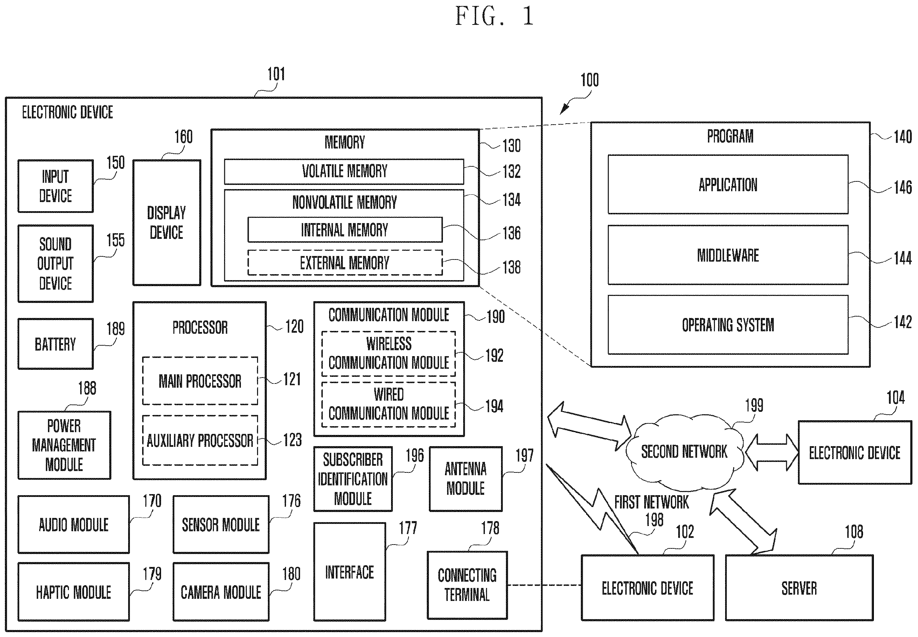

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module(SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

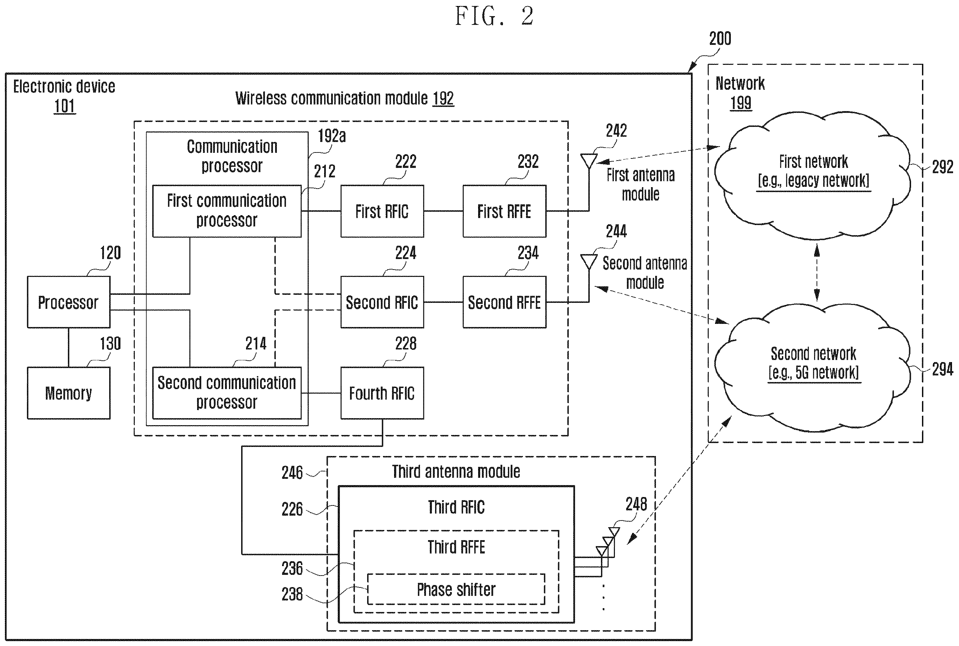

FIG. 2 is a block diagram illustrating an electronic device in a network environment including a plurality of cellular networks according to an embodiment of the disclosure.

Referring to FIG. 2, the electronic device 101 may include a first communication processor 212, second communication processor 214, first RFIC 222, second RFIC 224, third RFIC 226, fourth RFIC 228, first radio frequency front end (RFFE) 232, second RFFE 234, first antenna module 242, second antenna module 244, and antenna 248. The electronic device 101 may include a processor 120 and a memory 130. A second network 199 may include a first cellular network 292 and a second cellular network 294. According to another embodiment, the electronic device 101 may further include at least one of the components described with reference to FIG. 1, and the second network 199 may further include at least one other network. According to one embodiment, the first communication processor 212, second communication processor 214, first RFIC 222, second RFIC 224, fourth RFIC 228, first RFFE 232, and second RFFE 234 may form at least part of the wireless communication module 192. According to another embodiment, the fourth RFIC 228 may be omitted or included as part of the third RFIC 226.

The first communication processor 212 may establish a communication channel of a band to be used for wireless communication with the first cellular network 292 and support legacy network communication through the established communication channel. According to various embodiments, the first cellular network may be a legacy network including a second generation (2G), 3G, 4G, or long term evolution (LTE) network. The second communication processor 214 may establish a communication channel corresponding to a designated band (e.g., about 6 GHz to about 60 GHz) of bands to be used for wireless communication with the second cellular network 294, and support fifth generation (5G) network communication through the established communication channel. According to various embodiments, the second cellular network 294 may be a 5G network defined in 3rd generation partnership project (3GPP). Additionally, according to an embodiment, the first communication processor 212 or the second communication processor 214 may establish a communication channel corresponding to another designated band (e.g., about 6 GHz or less) of bands to be used for wireless communication with the second cellular network 294 and support 5G network communication through the established communication channel. According to one embodiment, the first communication processor 212 and the second communication processor 214 may be implemented in a single chip or a single package. According to various embodiments, the first communication processor 212 or the second communication processor 214 may be formed in a single chip or a single package with the processor 120, the auxiliary processor 123, or the communication module 190.

Upon transmission, the first RFIC 222 may convert a baseband signal generated by the first communication processor 212 to a radio frequency (RF) signal of about 700 MHz to about 3 GHz used in the first cellular network 292 (e.g., legacy network). Upon reception, an RF signal may be obtained from the first cellular network 292 (e.g., legacy network) through an antenna (e.g., the first antenna module 242) and be preprocessed through an RFFE (e.g., the first RFFE 232). The first RFIC 222 may convert the preprocessed RF signal to a baseband signal so as to be processed by the first communication processor 212.

Upon transmission, the second RFIC 224 may convert a baseband signal generated by the first communication processor 212 or the second communication processor 214 to an RF signal (hereinafter, 5G Sub6 RF signal) of a Sub6 band (e.g., 6 GHz or less) to be used in the second cellular network 294 (e.g., 5G network). Upon reception, a 5G Sub6 RF signal may be obtained from the second cellular network 294 (e.g., 5G network) through an antenna (e.g., the second antenna module 244) and be pretreated through an RFFE (e.g., the second RFFE 234). The second RFIC 224 may convert the preprocessed 5G Sub6 RF signal to a baseband signal so as to be processed by a corresponding communication processor of the first communication processor 212 or the second communication processor 214.

The third RFIC 226 may convert a baseband signal generated by the second communication processor 214 to an RF signal (hereinafter, 5G Above6 RF signal) of a 5G Above6 band (e.g., about 6 GHz to about 60 GHz) to be used in the second cellular network 294 (e.g., 5G network). Upon reception, a 5G Above6 RF signal may be obtained from the second cellular network 294 (e.g., 5G network) through an antenna (e.g., the antenna 248) and be preprocessed through the third RFFE 236. The third RFIC 226 may convert the preprocessed 5G Above6 RF signal to a baseband signal so as to be processed by the second communication processor 214. According to one embodiment, the third RFFE 236 may be formed as part of the third RFIC 226.

According to an embodiment, the electronic device 101 may include a fourth RFIC 228 separately from the third RFIC 226 or as at least part of the third RFIC 226. In this case, the fourth RFIC 228 may convert a baseband signal generated by the second communication processor 214 to an RF signal (hereinafter, an intermediate frequency (IF) signal) of an intermediate frequency band (e.g., about 9 GHz to about 11 GHz) and transfer the IF signal to the third RFIC 226. The third RFIC 226 may convert the IF signal to a 5G Above 6RF signal. Upon reception, the 5G Above 6RF signal may be received from the second cellular network 294 (e.g., a 5G network) through an antenna (e.g., the antenna 248) and be converted to an IF signal by the third RFIC 226. The fourth RFIC 228 may convert an IF signal to a baseband signal so as to be processed by the second communication processor 214.

According to one embodiment, the first RFIC 222 and the second RFIC 224 may be implemented into at least part of a single package or a single chip. According to one embodiment, the first RFFE 232 and the second RFFE 234 may be implemented into at least part of a single package or a single chip. According to one embodiment, at least one of the first antenna module 242 or the second antenna module 244 may be omitted or may be combined with another antenna module to process RF signals of a corresponding plurality of bands.

According to one embodiment, the third RFIC 226 and the antenna 248 may be disposed at the same substrate to form a third antenna module 246. For example, the wireless communication module 192 or the processor 120 may be disposed at a first substrate (e.g., main PCB). In this case, the third RFIC 226 is disposed in a partial area (e.g., lower surface) of the first substrate and a separate second substrate (e.g., sub PCB), and the antenna 248 is disposed in another partial area (e.g., upper surface) thereof; thus, the third antenna module 246 may be formed. By disposing the third RFIC 226 and the antenna 248 in the same substrate, a length of a transmission line therebetween can be reduced. This may reduce, for example, a loss (e.g., attenuation) of a signal of a high frequency band (e.g., about 6 GHz to about 60 GHz) to be used in 5G network communication by a transmission line. Therefore, the electronic device 101 may improve a quality or speed of communication with the second cellular network 294 (e.g., 5G network).

According to one embodiment, the antenna 248 may be formed in an antenna array including a plurality of antenna elements that may be used for beamforming. In this case, the third RFIC 226 may include a plurality of phase shifters 238 corresponding to a plurality of antenna elements, for example, as part of the third RFFE 236. Upon transmission, each of the plurality of phase shifters 238 may convert a phase of a 5G Above6 RF signal to be transmitted to the outside (e.g., a base station of a 5G network) of the electronic device 101 through a corresponding antenna element. Upon reception, each of the plurality of phase shifters 238 may convert a phase of the 5G Above6 RF signal received from the outside to the same phase or substantially the same phase through a corresponding antenna element. This enables transmission or reception through beamforming between the electronic device 101 and the outside.

The second cellular network 294 (e.g., 5G network) may operate (e.g., stand-alone (SA)) independently of the first cellular network 292 (e.g., legacy network) or may be operated (e.g., non-stand alone (NSA)) in connection with the first cellular network 292. For example, the 5G network may have only an access network (e.g., 5G radio access network (RAN) or a next generation (NG) RAN and have no core network (e.g., next generation core (NGC)). In this case, after accessing to the access network of the 5G network, the electronic device 101 may access to an external network (e.g., Internet) under the control of a core network (e.g., an evolved packed core (EPC)) of the legacy network. Protocol information (e.g., LTE protocol information) for communication with a legacy network or protocol information (e.g., new radio (NR) protocol information) for communication with a 5G network may be stored in the memory 130 to be accessed by other components (e.g., the processor 120, the first communication processor 212, or the second communication processor 214).

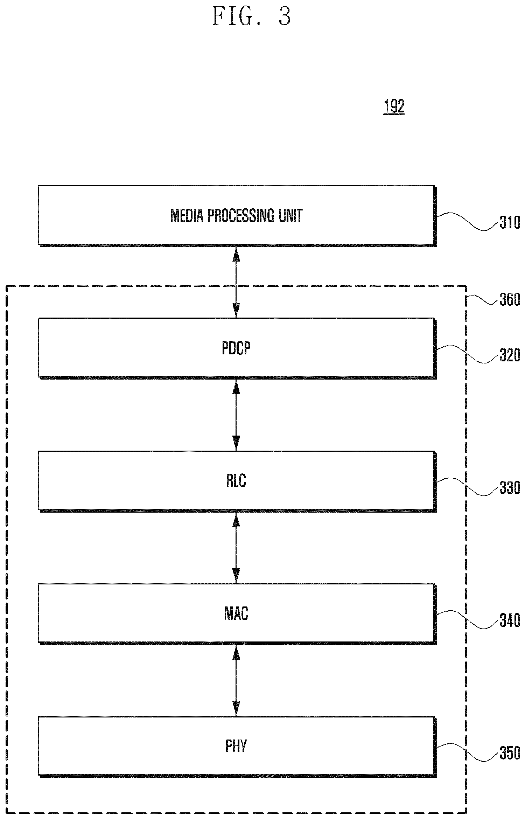

FIG. 3 is a block diagram illustrating a communication processor of an electronic device according to various embodiments of the disclosure.

A communication processor (e.g., the wireless communication module 192 in FIG. 1) of the electronic device (e.g., the electronic device 101 in FIG. 1) according to various embodiments of the disclosure may include multiple software layers for data communication. For example, the communication processor (e.g., the first communication processor 212 or the second communication processor 214 in FIG. 2) included in the wireless communication module 192 may perform and provide the multiple software layers. The multiple software layers may include one or more entities.

Referring to FIG. 3, a user plane protocol 360 configured to process received/transmitted data and a control plane protocol (not shown) configured to process a control signal with respect to data communication may be performed on the communication processor 192. The user plane protocol 360 may include a packet data convergence protocol (PDCP) layer 320, a radio layer control (RLC) layer 330, a media access control (MAC) layer 340, and a physical layer 350. Various entities 320, 330, 340, 350 of the user plane protocol 360 may be operatively connected to the media processing unit 310, receive data in a packet form generated by the media processing unit 310, and perform various operations for transmitting packets to an external electronic device 104 through a base station which provides a communication network (e.g., a cellular network) between the electronic device 101 and the external electronic device 104.

According to various embodiments of the disclosure, the media processing unit 310 may receive media data (e.g., voice data or image data) transmitted by an application processor (e.g., the processor 120 in FIG. 1) and perform various processing with respect to media data to be transmitted to the external electronic device 104. According to an embodiment, the media processing unit 310 may receive media data from the application processor 120, perform encoding processing with respect to the media data, convert the encoded data into multiple packets, and perform encryption processing with respect to the converted packets. The media data may be received from a component (e.g., a microphone (e.g., the input device 150 in FIG. 1) or a camera (e.g., the camera module 180 in FIG. 1)) operatively connected to the communication processor 192 other than the application processor 120. The media processing unit 310 may transmit the processed data to the user plane protocol 360.

According to an embodiment, the packet generated by the media processing unit 310 may be a packet related to a service requiring minimization of delay time caused by packet transmission or reception. For example, the packet generated by the media processing unit 310 may be a packet related to a voice call service or video call service which is a service requiring minimization of delay time due to packet transmission or reception. In connection with generating multiple packets, the media processing unit 310 may assign a sequence number to each of generated multiple packets. The external electronic device 104 which has received multiple packets may sequentially align the packets based on the sequence number assigned to each of the multiple packets and perform media reproduction by using aligned packets.

According to various embodiments of the disclosure, the PDCP entity 320 may receive media data generated by the media processing unit 310, and generate data units by dividing the received media data into a predetermined size. The PDCP entity 320 may assign a sequence number with respect to each of the data units. The PDCP entity 320 may transmit the generated data units to the RLC entity 330. Sequence numbers assigned to the data units by the PDCP entity 320 may be different from sequence numbers assigned to the packets by the media processing unit 310.

According to various embodiments of the disclosure, the PDCP entity 320 in view of receiving data by the communication processor 192 (downlink) may identify the sequence number of each data received from the RLC entity 330 and combine the received data based on the sequence number. The PDCP entity 320 may perform various processing operations (e.g., integrity verification) with respect to the received data and transmit the processed data to another layer (e.g., various layers (e.g., the media processing unit 310) higher than the PDCP layer 630).

According to various embodiments of the disclosure, the RLC entity 330 may perform various operations with respect to the data transmitted by the PDCP entity 320 and the data transmitted by the MAC entity 340.

According to various embodiments of the disclosure, the RLC entity 330 may identify the sequence numbers of the multiple data included in the data (e.g., RLC SDUs) transmitted by the PDCP entity 320 and compose, divide, or reassemble the data to a size that the MAC entity 340 may receive. The RLC entity 330 may transmit the data in which a RLC header is included in the composed, divided, or reassembled data to the MAC layer 340.

According to various embodiments of the disclosure, the RLC entity 330 in view of receiving data by the communication processor 192 (downlink) may identify the sequence number of the data transmitted by the MAC entity 340 and perform processing (e.g., composing, dividing, or reassembling of the data) configured to transmit the data to the PDCP entity 320.

According to various embodiments of the disclosure, the MAC entity 340 may perform an operation of checking an error in the data (MAC SDUs) transmitted by the RLC entity 330 or the data received from the PHY entity 350 which transmits or receives data through a wireless channel, or various operations for processing data received from a physical layer (PHY layer).

According to various embodiments of the disclosure, the MAC entity 330 in view of transmitting data by the communication processor 192 may select a proper transmission channel configured to transmit data received from the RLC entity 320, and perform an operation of adding required control information to the data received from the RLC entity 320.

According to various embodiments of the disclosure, the MAC entity 340 may check an error in data received from the PHY entity 350, and, when an error occurs, perform forward error correction (FEC).

According to various embodiments of the disclosure, the MAC entity 340 may identify whether an error occurs in a transport block received from the PHY entity 350. When an error is detected in a transport block, the MAC entity 340 may request data retransmission to a base station connected to the electronic device 101.

According to various embodiments of the disclosure, the PHY entity 350 may perform various operations (e.g., encoding, modulation, or resource allocation) configured to transmit data transmitted from the MAC entity 340 to the external electronic device 104 and transmit data to a base station. The base station may transmit the received data to the external electronic device 104. Alternatively, the PHY entity 350 may receive data transmitted by the MAC entity 340 and perform various operations (e.g., decoding or demodulation) with respect to the received data.

According to various embodiments of the disclosure, at least some packets of packets transmitted by the electronic device 101 to the external electronic device 104 may fail to be transmitted due to various causes (e.g., a cause of the electronic device 101 itself, a cause of the external electronic device 104 itself, or a cause of a network between the electronic device 101 and the external electronic device 104). The user plane protocol 360 may perform, in case that at least some packets of packets transmitted by the electronic device 101 fail to be transmitted, perform a retransmission operation using the RLC entity 330 (e.g., an acknowledgment mode (AM) which is a retransmission mode using an ack signal transmitted by the RLC entity of the external electronic device 104) or a retransmission operation using the MAC entity 340 (e.g., a hybrid auto repeat request (Hybrid-ARQ) supported by the MAC entity 340).

According to a comparative example, in connection with performing retransmission of packets related to a service requiring low latency (e.g., voice over long term evolution (VoLTE), voice over Wi-Fi (VoWiFi), and vehicle to everything (V2X)), the communication processor 192 may not perform a retransmission operation using the RLC entity 330 so as to reduce delay time and perform HARQ which is a retransmission operation using the MAC entity 340 having a relatively low delay time. The communication processor 192 may perform a retransmission operation using the MAC entity 340 a predetermined number of times (e.g., four times) and in case that the retransmission failed, end the transmission of the packets that have failed to be retransmitted. Here, the failure in data transmission may cause a user of the external electronic device 104 to receive media data of degraded quality. Hereinafter, a description will be given of a packet retransmission operation based on a network state to which the electronic device 101 is connected and possibility of receiving packets of the external electronic device 104 predicted based on the network stat to reduce or prevent the issue described above.

According to various embodiments of the disclosure, the communication processor 192 may identify whether a transmission operation of some packets among multiple packets corresponding to media data transmitted by the user plane protocol 360 to the external electronic device 104 has failed.

According to various embodiments of the disclosure, the communication processor 192 may identify whether an ack signal indicating that multiple packets have been received within a predetermined time is received from a base station, and determine whether transmission of at least some packets fails, based on whether an ack signal is received. For example, the communication processor 192 may identify that at least some packets have failed to be transmitted in response to failure in receiving an ack signal indicating that multiple packets is received from a base station in a predetermined time or receiving a nack signal indicating that multiple packets are not received from a base station.

According to various embodiments of the disclosure, the communication processor 192 may identify that transmission of at least some packets among multiple packets corresponding to media data has failed, and control the MAC entity 340 to retransmit the packets having failed to be transmitted.

According to various embodiments of the disclosure, the MAC entity 340 may perform retransmission of the packets having failed to be transmitted to the external electronic device 101 by using various schemes (e.g., a Hybrid ARQ mode or ARQ mode). The MAC entity 340 may perform retransmission of at least some packets a predetermined number of times until receiving, through a physical layer HARQ indication channel (PHICH), an indicator indicating that the PHY entity 350 has successfully received packets having been retransmitted from the base station.

According to various embodiments of the disclosure, the communication processor 192 may identify whether the transmission operation of packets by using the user plane protocol 360 fails.

According to various embodiments of the disclosure, in response to identifying that an indicator indicating a success in receiving a packet retransmitted through PHICH within a predetermined time is not received, the MAC entity 340 may determine that at least some packets fail to be retransmitted. The MAC entity 340 may delete at least some packets stored in a buffer existing in the MAC entity 340 in response to the failure in retransmission, based on control of the communication processor 192. According to various embodiments of the disclosure, the communication processor 192 may identify state information of a wireless channel of a network used for retransmission of at least some packets, in response to the failure in retransmission of at least some packets. The network used for retransmission of at least some packets may be a communication network (e.g., Wi-Fi or a cellular network) generated by a separate component (e.g., an access point (AP) or a base station) between the electronic device 101 and the external electronic device 104 or a communication channel to which the electronic device 101 and the external electronic device 104 are directly connected without a separate component.

According to various embodiments of the disclosure, the state information of a wireless channel of a network may be information related to quality of a channel generated between the electronic device 101 and a base station. For example, the state information of a wireless channel of a network may include at least a portion of information (e.g., received signal strength indication (RSSI) and block error rate (BLER)) capable of directly or indirectly indicating quality of a channel generated between the electronic device 101 and a base station, information (e.g., uplink grant information) related to a resource granted to transmit packets, information (e.g., buffer status indicator (BSI)) indicating a state of a buffer implemented in the MAC entity 340, and information (e.g., buffer occupation (BO)) indicating occupation rate of an image packet or a voice packet in a transmission buffer implemented in the RLC entity 330. The communication processor 192 may receive network state information through the MAC entity 340 or the PHY entity 350.

According to various embodiments of the disclosure, the communication processor 192 may determine whether to perform retransmission of a packet having failed to be transmitted using the user plane protocol 360 by using the media processing unit 310, based on the state information of a wireless channel of a network.

According to various embodiments of the disclosure, the packet to be retransmitted by the communication processor 192 by using the media processing unit 310 may be some of packets stored in the memory 130 before being transmitted to the user plane protocol 360. Before transmitting a packet to the user plane protocol 360, the media processing unit 310 may store the packet in the memory 130 implemented in the media processing unit 310. The media processing unit 310 may select packets corresponding to determined sequence numbers from among packets stored in the memory 130 and retransmit the selected packets.

According to another embodiment of the disclosure, the packet to be retransmitted by the communication processor 192 by using the media processing unit 310 may be packets regenerated by a media processing unit 310 after retransmission failed. The media processing unit 310 may receive from the MAC entity 340 information indicating the sequence numbers of the packets which is identified to have failed to be retransmitted by the MAC entity 340. The media processing unit 310 may extract or generate the packet corresponding to data corresponding to the received sequence number on the memory 130.

According to another embodiment, the media processing unit 310 may receive an indicator indicating a failure in retransmitting from the MAC entity 340 and determine sequence information of the packet having failed to be retransmitted based on the time when the indicator is received. The media processing unit 310 may extract or generate the packet corresponding to determined sequence numbers on the memory 130.

According to various embodiments of the disclosure, the communication processor 192 may identify state information of a network between the electronic device 101 and a base station based on state information of a wireless channel of a network, and in case that retransmission is predicted to be successful, determine to perform retransmission of the packet having failed to be transmitted by using the user plane protocol 360. For example, in response to identifying that a value (e.g., received signal strength indication (RSSI)) indicating a network quality satisfies a predetermined condition, the communication processor 192 may determine to perform retransmission of the packet having failed to be transmitted by using the user plane protocol 360.

According to an embodiment, the predetermined condition may be a condition related to a block error rate (BLER) of a transmission channel. For example, in response to identifying that a block error rate (BLER) of a transmission channel included in the value indicating network quality is 40% or more and a signal transmission strength is maximum, the communication processor 192 may identify that the value indicating network quality does not satisfy the predetermined condition and determine not to perform packet transmission using the user plane protocol 360.

According to an embodiment, the predetermined condition may be a condition related to a reference signal received power (RSRP) of a reception channel. For example, in response to identifying that a RSRP of a reception channel included in the value indicating network quality is -120 dBm or less, the communication processor 192 may identify that the value indicating network quality does not satisfy the predetermined condition and determine not to perform packet retransmission using the user plane protocol 360.

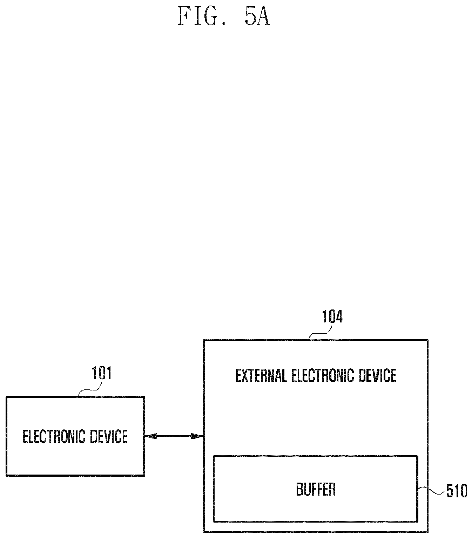

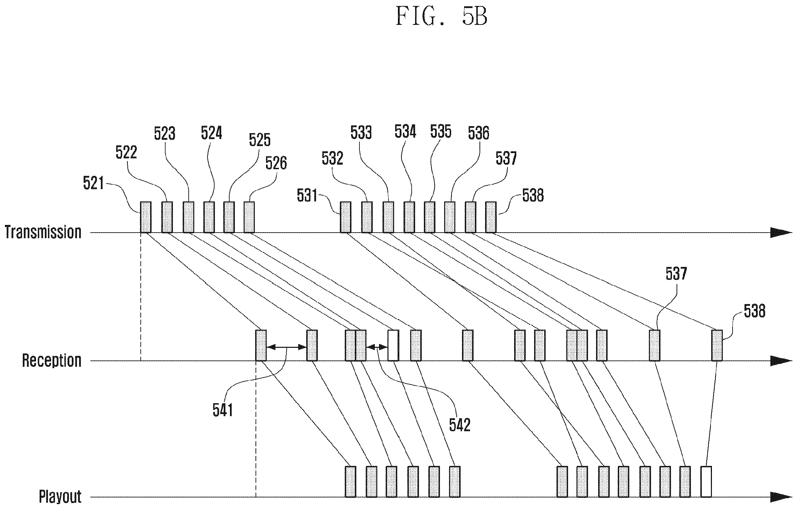

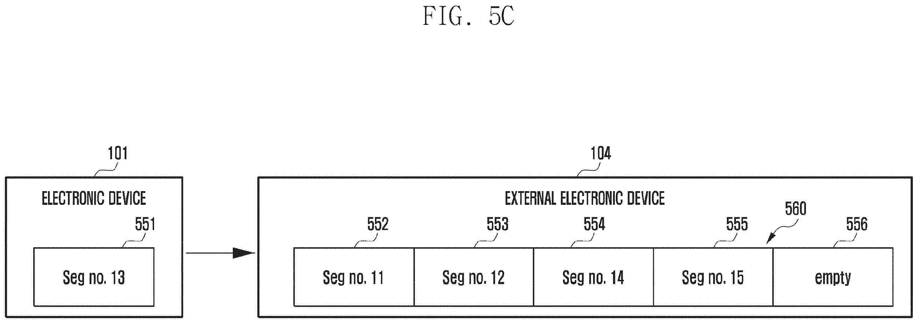

According to various embodiments of the disclosure, in case that retransmission is determined to be successful within a predetermined time, the communication processor 192 may determine to perform retransmission with respect to the packet having failed to be transmitted by the user plane protocol 360. The predetermined time may be determined based on remaining capacity of a buffer in which the external electronic device 104 temporarily stores packets having succeeded to be transmitted among packets to be transmitted and a reproduction time of media corresponding to the packet. For example, the communication processor 192 may predict a size of a buffer included in the external electronic device 104 based on state information of a wireless channel of a network. The communication processor 192 may determine a maximum number of packets the buffer may store, based on the predicted remaining capacity of the buffer of the external electronic device 104 and determine whether to perform retransmission based on a result of comparison of the determined number of packets and the number of packets to be retransmitted. For example, in case that the determined number of packets is smaller than the number of packets to be retransmitted, the communication processor 192 may determine to perform retransmission. The remaining capacity of the buffer may mean a capacity excluding the capacity of currently stored data from the maximum capacity in which the buffer may store data. The external electronic device 104 configured to receive the media data may include a buffer configured to temporarily store received packets for continuous output data. The external electronic device 104 may include the buffer to temporarily store received packets in the buffer, receive packets which have not been received, and then perform decoding so as to implement a continuous media output. The buffer included in the electronic device 104 configured to receive data will be described below with reference to FIG. 5A, FIG. 5B, and FIG. 5C.

According to various embodiments of the disclosure, the communication processor 192 may determine (or predict) a size of the buffer of the external electronic device 104, based on a state of a network and determine whether to retransmit packets having failed to be transmitted, based on a result of comparison of the size of the buffer and a size of a packet having failed to be transmitted by using the user plane protocol 360. The size of the buffer of the external electronic device 104 may be changed according to a state of a network. For example, in case that quality of a network is relatively low, a size of the buffer of the external electronic device 104 may increase for a continuous media output compared to a case in which quality of a network is relatively high.

According to various embodiments of the disclosure, in case that the size of the packet having failed to be transmitted is larger than the size of the remaining buffer of the external electronic device 104, the communication processor 192 may determine to retransmit the packet having failed to be transmitted.

According to various embodiments of the disclosure, the communication processor 192 may determine the number (or of packets (or the size of packets) to be retransmitted, based on the remaining capacity of the buffer. For example, the communication processor 192 may determine the number (or the size) of packets to be retransmitted not to exceed the remaining capacity of the buffer of the external electronic device 104. The communication processor 192 may identify information included in the state information of a wireless channel and related to a resource granted for the electronic device 101 to use a network and determine whether to perform retransmission, based on information related to the granted resource. For example, the communication processor 192 may track information related to a granted resource and determine not to perform retransmission using the media processing unit 310 in an environment in which the remaining capacity of the buffer of the external electronic device 104 decreases (e.g., an environment in which data transmission or reception is difficult).

According to various embodiments of the disclosure, the communication processor 192 may compare a size of data stored in a buffer of the RLC entity 330 and a resource amount (uplink grant) of a transmission channel which is included in the state information of a wireless channel and assigned from a network for a predetermined time (e.g., 20 ms), and determine whether to perform retransmission using the media processing unit 310, based on a result of the comparison. For example, in response to identifying that the size of data stored in the butter is three times or more (or exceeds three times) the resource amount of the transmission channel, the communication processor 192 may determine to perform retransmission using the media processing unit 310. For another example, in response to identifying that the size of data stored in the butter is three times or less (or is less than three times) the resource amount of the transmission channel, the communication processor 192 may determine not to perform retransmission using the media processing unit 310.

According to various embodiments of the disclosure, the communication processor 192 may cause the external electronic device 104 to perform uninterrupted continuous content reception and output by performing retransmission of packets having failed to be transmitted, based on a state of a network.

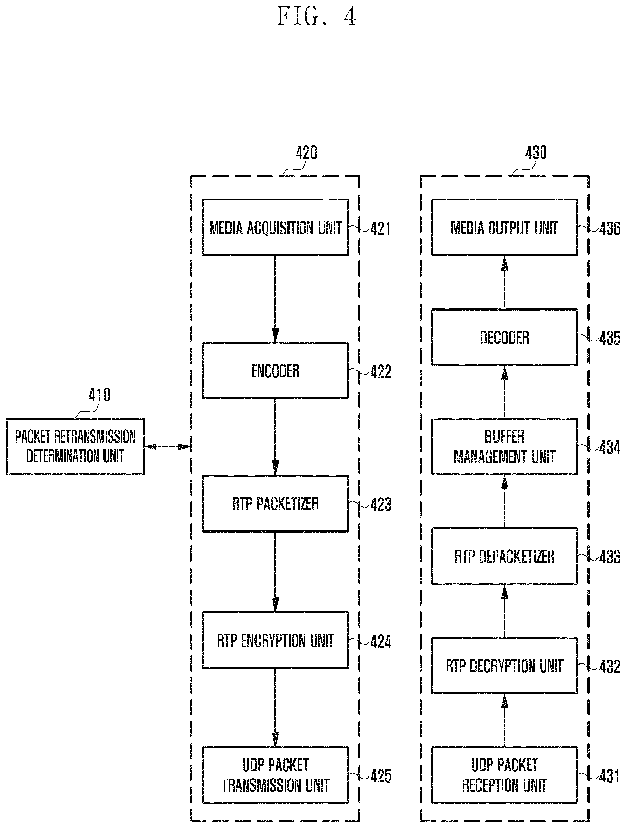

FIG. 4 is a block diagram illustrating a media processing unit according to various embodiments of the disclosure.

Referring to FIG. 4, a media processing unit (e.g., the media processing unit 310 in FIG. 3) may include a packet retransmission determination unit 410, a packet data transmission protocol 420, and a packet data reception protocol 430.

According to various embodiments of the disclosure, in response to identifying a failure in transmission performed by a MAC entity (e.g., the MAC entity 340 in FIG. 3), the packet retransmission determination unit 410 may receive state information of a network from the MAC entity 340 and/or the PHY entity 350. The packet retransmission determination unit 410 may determine whether to perform retransmission using the media processing unit 310 of a packet having failed to be transmitted through the user plane protocol 360, based on the state information of a network. In response to determining to perform retransmission, the packet retransmission determination unit 410 may select a packet corresponding to a determined sequence number among packets stored in the memory 130 and control the packet data protocol 420 to transmit the selected packets to a user plane protocol (e.g., the user plane protocol 360 in FIG. 3) for retransmission.

According to another embodiment, in response to determining to perform retransmission, the packet retransmission determination unit 410 may generate a packet to be retransmitted and control the packet data transmission protocol 420 to transmit the generated packet to a user plane protocol (e.g., the user plane protocol 360 in FIG. 3).

According to various embodiments of the disclosure, the packet data transmission protocol 420 may convert media desired to be transmitted to the external electronic device 104 into packet data and perform a series of operations of transmitting the converted packet data to the user plane protocol 360. The packet data transmission protocol 420 may include a media acquisition unit 421 configured to acquire media data temporarily or non-temporarily stored in a memory (e.g., the memory 130 in FIG. 1), an encoder 422 configured to perform encoding on media data transmitted by the media acquisition unit 421, an RTP packetizer 423 configured to convert the encoded media date into media packet data in a real time protocol (RTP) packet form which is implemented to lower delay time, an RTP encryption unit 424 configured to encrypt the media packet data, and/or a user datagram protocol (UDP) packet transmission unit 425 configured to convert and transmit the encrypted media packet data into a packet based on a UDP communication protocol which is implemented to have relatively fast transmission time. The media packet data converted by the UDP packet transmission unit 425 may be transmitted to the user plane protocol 360 implemented in a communication processor (e.g., the communication processor 192 in FIG. 3) and as shown in FIG. 3, the media packet data may be transmitted to the external electronic device 104 via a base station. The electronic device 101 and the communication processor 192 described in FIG. 3 may transmit packets by using the packet data transmission protocol 420.

According to various embodiments of the disclosure, the packet data reception protocol 430 may convert packet data which is transmitted by the external electronic device 104 to the electronic device 101 via a base station into media and perform a series of operations of outputting the converted media. The packet data reception protocol 430 may include a user datagram protocol (UDP) packet reception unit 431 configured to receive a media data packet based on a user datagram protocol (UDP) communication protocol implemented to have relatively fast transmission time and convert the media data packet into a data packet in a RTP form, an RTP decryption unit 432 configured to decrypt a data packet in an RTP form, an RTP depacketizer 433 configured to convert decrypted packet data into media data, a buffer (not shown) (e.g., the memory 130 in FIG. 1) configured to temporarily store converted media data, a buffer management unit 434 configured to manage the buffer, a decoder 435 configured to decode media data transmitted from the buffer 434, and/or a media output unit 436 configured to output decoded media data. The external electronic device 104 configured to receive media data described in FIG. 3 may include a communication processor (e.g., the wireless communication module 192 in FIG. 1) including a buffer (not shown) and the media reception protocol 430.

According to various embodiments of the disclosure, the buffer (not shown) may be implemented on a memory included in the communication processor 192 or a memory (e.g., the memory 130 in FIG. 1) commonly used by the communication processor 192 and/or an application processor (e.g., the processor 120 in FIG. 1). For example, the buffer may include a partial logical or physical address area of the memory 130 assigned to be usable by the media reception protocol 430. The buffer management module 434 may manage capacity of the buffer or manage data input or output of the buffer. For example, in case that data stored in the buffer 130 satisfies a predetermined condition, the buffer management module 434 may not transmit the stored data to the decoder 435 and temporarily store media data transmitted by the external electronic device 104. In response to a change from a state that satisfies a predetermined condition to a state that does not satisfy the predetermined condition, the buffer management unit 434 may transmit stored data to the decoder 435. The buffer management unit 434 may adjust storage capacity of the buffer 130 based on state information of a network of the electronic device 101. For example, in response to identifying that a state of a wireless channel of a network of the electronic device 101 is relatively bad, the buffer management unit 434 may increase storage capacity of the buffer 130. For another example, in response to identifying that a state of a wireless channel of a network of the electronic device 101 is relatively good, the buffer management unit 434 may reduce storage capacity of the buffer 130. An operation of the buffer related to the predetermined condition will be described with reference to FIG. 5A and FIG. 5B below.

A portion of the components shown in FIG. 4 may be omitted or portions of the components are coupled to each other to be implemented on the electronic device 101. Furthermore, components not shown in FIG. 4 may be implemented in the electronic device 101.

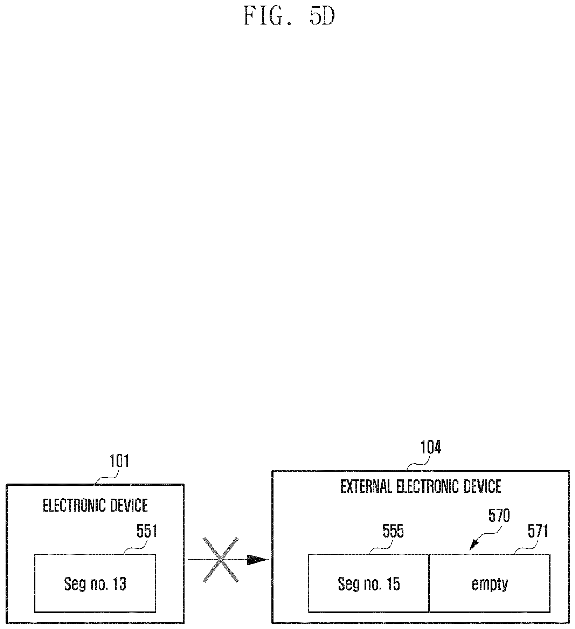

FIG. 5A, FIG. 5B, FIG. 5C, and FIG. 5D are views illustrating media processing using a buffer according to various embodiments of the disclosure.

FIG. 5A is a view illustrating an electronic device (e.g., the electronic device 101 in FIG. 1) and an external electronic device (e.g., the electronic device 104 in FIG. 1) and the electronic device 101 and the external electronic device 104 may perform an operation of exchanging media data through a wireless communication (e.g., Wi-Fi or a cellular network). For example, the electronic device 101 and the external electronic device 104 may be connected to each other through VoLTE or VoWiFi and exchange voice data or image data. Hereinafter, for convenience of explanation, a description will be given on the assumption that the side transmitting the media data is the electronic device 101 and the side receiving the media data is the external electronic device 104. However, the electronic device 101 and the external electronic device 104 may transmit or receive media data to/from each other.

According to various embodiments of the disclosure, the external electronic device 104 may include a buffer 510 configured to temporarily store media data transmitted by the electronic device 101. The buffer 510 may include a partial area of a memory (e.g., the memory 130 in FIG. 1) of the external electronic device 104. For example, the buffer 510 may include a predetermined logical or physical address area of the memory 130. In response to identifying that data stored in the buffer 510 satisfies a predetermined condition, the external electronic device 104 may not process the data stored in the buffer 510. For example, it may maintain a state in which the stored data is not processed (e.g., decoding) and temporarily stored. In response to identifying that the data stored in the buffer 510 does not satisfy the predetermined condition, the external electronic device 104 may process the data stored in the buffer 510 and output the processed data through a speaker (e.g., the audio output device 155 in FIG. 1) or a display (e.g., the display device 160 in FIG. 1). In case that the processed data is data in a voice form, the external electronic device 104 may output the processed data through the speaker 155. In case that the processed data is data in an image form, the external electronic device 104 may output the processed data through the display 160.

According to various embodiments of the disclosure, the predetermined condition may include a case in which reception intervals of packets corresponding to a portion of media data received by the external electronic device 104 from the electronic device 101 may be different (e.g., a case in which the reception interval between packets is not constant). Referring to 5B, multiple packets (e.g., packet 1 521, packet 2 522, packet 3 523, packet 4 524, packet 5 525, and packet 6 526) transmitted by the electronic device 101 are transmitted through a network so that reception intervals of each packet received by the external electronic device 104 may be different. For example, a reception interval 541 between packet 1 521 and packet 2 522 may be different from a reception interval 542 between packet 4 524 and packet 5 525. In response to identifying that reception intervals of packets are different, the external electronic device 104 may not process some packets (e.g., packet 1 521, packet 2 522, and packet 3 523) stored in the buffer 524 for a predetermined time. For example, the external electronic device 104 may maintain a state in which some packets are temporarily stored in the buffer 524. In response to identifying that all packets up to packet 6 526 are received within a predetermined time, the external electronic device 104 may process the received packets (e.g., packet 1 521 to packet 6 526) and output (playout) the processed data. As such, the external electronic device 104 may perform continuous media output. In an embodiment, the external electronic device 104 may identify whether all packets are received for a predetermined time. For example, in response to identifying that all packets up to packet 6 526 are received before a predetermined time is expired, the external electronic device 104 may process all received packets and output same. The predetermined time may be determined based on a size of the buffer 524. For example, in case that one packet includes an audio having a length of 20 ms and the buffer 524 is capable of storing five packets, the external electronic device 104 may determine the predetermined time to be 100 ms.

According to various embodiments of the disclosure, the predetermined condition may include a case in which at least some packets of packets corresponding to a portion of data transmitted by the electronic device 101 are not received by the external electronic device 104. Referring to FIG. 5B, the external electronic device 104 may not receive at least some packets (e.g., packet 7 537 or packet 8 538) among packets (e.g., packet 1 531, packet 2 532, packet 3 533, packet 4 534, packet 5 535, packet 6 536, packet 7 537 and packet 8 538) transmitted by the electronic device 101. The external electronic device 104 may maintain a state in which the received packets (packet 1 531, packet 2 532, packet 3 533, packet 4 534, packet 5 535, and packet 6 536) are temporarily stored in the buffer 510 for a predetermined time, and wait for receiving unreceived packets (e.g., packet 7 537 or packet 8 538) for a predetermined time. The external electronic device 104 may process the packets (e.g., packet 7 537) received before a predetermined time is expired and output processed data. As such, continuous media output may be performed. The external electronic device 104 may not process a packet (e.g., packet 8 538) received after the predetermined time is expired.

FIG. 5C and FIG. 5D are views illustrating an embodiment in which the communication processor 192 of the electronic device 101 determines whether to perform packet retransmission based on a predicted size of the buffer of the external electronic device according to various embodiments of the disclosure.

FIG. 5C illustrates a case in which the electronic device 101 transmits data to the external electronic device 104 in a network having a relatively low quality, and FIG. 5D illustrates a case in which the electronic device 101 transmits data to the external electronic device 104 in a network having a relatively high quality.

According to various embodiments of the disclosure, the buffer 510 may be controlled by a communication processor (e.g., the wireless communication module 192 in FIG. 1) included in the external electronic device 104. The communication processor 192 (or the buffer management unit 434 in FIG. 4) may adjust storage capacity of the buffer 510 based on a quality of a network. For example, in a situation in which a quality of a network is relatively low, the external electronic device 104 may increase a size of the buffer of the external electronic device 104 for continuous media output compared to a situation in which a quality of a network is relatively high. Referring to FIG. 5C and FIG. 5D, the buffer 560 of the external electronic device 104 may have a size relatively larger than that of the buffer 570 of the external electronic device 104 in a situation in which a quality of a network is relatively high. For example, the external electronic device 104 may increase the size of the buffer 560 by extending a logical or physical address area assigned to the buffer 560. The situation in which a quality of a network is relatively low may be referred to as a situation having a high possibility of occurring a predetermined condition implemented to control the buffer 560 described above, and the external electronic device 104 may perform continuous output of the received media by increasing a size of the buffer 560.

According to various embodiments of the disclosure, a communication processor (e.g., the communication processor 192 in FIG. 3) (or a packet retransmission determination unit (e.g., the packet retransmission determination unit 410 in FIG. 4)) of the electronic device 101 may determine (or predict) a size of the buffer 560, 570 of the external electronic device 104 based on state information of a wireless channel of a network. The communication processor 192 or the packet retransmission determination unit 410 may determine whether to perform retransmission using the media processing unit 310 based on the determined or predicted size of the buffer 560, 570 of the external electronic device 104.

Referring to FIG. 5C, the external electronic device 104 may succeed to receive some packets 552, 553, 554, 555 but fail to receive some other packets 551 from the electronic device 101. In a situation in which a quality of a network is relatively low (e.g., a state in which a BLER of a transmission channel has a relatively large value, and a state in which RSRP has a relatively low value), the communication processor 192 or the packet retransmission determination unit 410 may determine (or predict) a size of the buffer 560 of the external electronic device 104 based on a quality of the network. The communication processor 192 may determine whether to retransmit the packet 551 having failed to be transmitted by using the user plane protocol 360, based on the size of the buffer 560. The size of the buffer 560 of the external electronic device 104 may be relatively large in a state in which a quality of a network is a relatively low. In case of FIG. 5C, the buffer 560 of the external electronic device 104 may have an available space 556 configured to store the packet 551 to be retransmitted. As the size of the buffer 560 relatively increases, the external electronic device 104 may delay processing of the packets 552, 553, 554, 555 having succeeded in transmission and even in case that the packet 551 is received late, the external electronic device 104 may process the packets 551, 552, 553, 554, 555. Here, the communication processor 192 may determine to perform retransmitting of the packet 551 having failed to be transmitted by using the user plane protocol 360. After all packets 551, 552, 553, 554, 555 are received, the external electronic device 104 may process the packets 551, 552, 553, 554, 555 based on sequence numbers assigned to the packets 551, 552, 553, 554, 555.

Referring to FIG. 5D, the external electronic device 104 may succeed to receive some packets 552, 553, 554, 555 but fail to receive some other packets 551 from the electronic device 101. In a situation in which a quality of a network is relatively high (e.g., a state in which a BLER of a transmission channel has a relatively low value, and a state in which RSRP has a relatively high value), the communication processor 192 or the packet retransmission determination unit 410 may determine (or predict) a size of the buffer 570 of the external electronic device 104 based on a quality of the network. The communication processor 192 may determine whether to retransmit the packet 551 having failed to be transmitted by using the user plane protocol 360, based on the size of the buffer 570. The size of the buffer 570 of the external electronic device 104 may be relatively small in a state in which a quality of a network is a relatively high. In case of FIG. 5D, the buffer 570 of the external electronic device 104 may have an available space 571 configured to store the packet 551 to be retransmitted but may not have an available space enough to delay processing of the packets 552, 553, 554 having succeeded to be transmitted by using the user plane protocol 360. As the size of the buffer 560 relatively decreases, the external electronic device 104 may have difficulty delaying processing of packets 552, 553, 554 having succeeded to be transmitted by using the user plane protocol 360. In case that the packet 551 is received late, the external electronic device 104 may not be able to process the packet 555. Here, the communication processor 192 may determine not to perform retransmitting of the packet 551 having failed to be transmitted by using the user plane protocol 360.

According to various embodiments of the disclosure, the communication processor 192 or the packet retransmission determination unit 410 may compare the size of the buffer 560, 570 and the number (or size) of packets to be retransmitted by using the media processing unit 310 and determine whether to perform retransmission using the media processing unit 310 based on a result of the comparison. For example, the communication processor 192 of the electronic device 101 may determine a maximum number of packets the buffer may store, based on the predicted capacity of the buffer 510 and determine whether to perform retransmission using the media processing unit 310 based on a result of comparison of the determined number of packets and the number of packets to be secondarily retransmitted. For example, in case that the determined number of packets is smaller than the number of packets to be secondarily retransmitted, the communication processor 192 may determine to perform retransmission using the media processing unit 310. The case that the number of packets to be secondarily retransmitted is smaller than the determined number of packets may mean that packets received through retransmission using the media processing unit 310 by the external electronic device 104 may be output from the buffer 510 to the decoder 435 and the media output unit 436 together with the packets previously stored in the buffer 510 and continuous output of a content may be performed.

An electronic device according to various embodiments of the disclosure may include a media processing unit configured to generate packets and a communication processor including a user plane protocol configured to transmit the packets to an external electronic device, wherein the communication processor is configured to, in response to determining a failure in transmitting at least some of the packets by using the user plane protocol, identify state information of a network used to retransmit the at least some packets, determine, based on the state information of the network, whether to retransmit the at least some packets, and control, based on whether to retransmit the packets, the media processing unit to generate the packets to be retransmitted.

In the electronic device according to various embodiments of the disclosure, the communication processor may be configured to, in response to identifying of a failure in transmitting the packets, transmit the packet by using an automatic repeat request (Hybrid-ARQ), and identify, in response to identifying of a failure in transmitting the packets by using the Hybrid-ARQ, state information of the network.

In the electronic device according to various embodiments of the disclosure, the communication processor may be configured to, in response to identifying of a failure in transmitting the at least some packets, control a MAC layer to delete the at least some packets having failed to be transmitted.

In the electronic device according to various embodiments of the disclosure, the communication processor may be configured to control a media processing unit to generate the packets to be retransmitted, based on sequence numbers of the packets having failed to be transmitted.

In the electronic device according to various embodiments of the disclosure, the communication processor may be configured to control the MAC layer to identify the sequence numbers of the packets having failed to be transmitted and determine the packets to be retransmitted, based on the identified sequence number.

In the electronic device according to various embodiments of the disclosure, the communication processor may be configured to identify sequence numbers, based on transmission failure time information of the packets having failed to be transmitted.

In the electronic device according to various embodiments of the disclosure, the communication processor may be configured to determine a size of a buffer implemented in the external electronic device and temporarily storing packets having succeeded to be transmitted among the packets, based on the state information of the network, and determine whether to retransmit the at least some packets, based on the determined size of the buffer.

In the electronic device according to various embodiments of the disclosure, the communication processor may be configured to determine the number of packets to be retransmitted, based on the determined size of the buffer.

In the electronic device according to various embodiments of the disclosure, the communication processor may be configured to cause a physical layer (PHY) or the MAC layer implemented in the communication processor to receive the state information of the network.

In the electronic device according to various embodiments of the disclosure, the state information of the network may be at least one of a block error rate (BLER), uplink (UL) grant information, or a buffer status indicator (BSI).

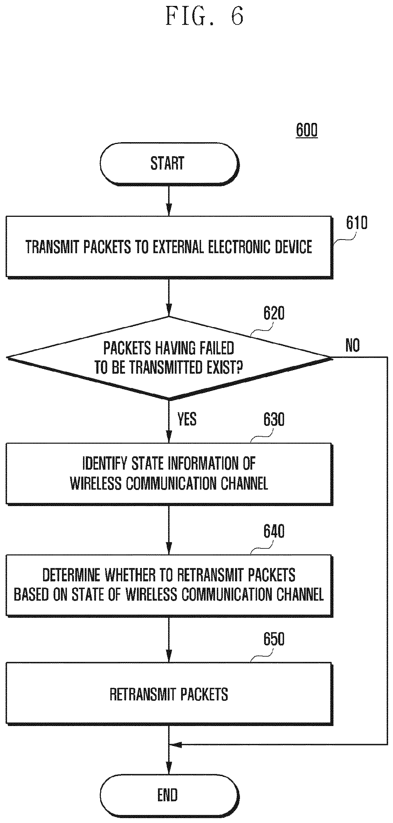

FIG. 6 is an operation flowchart illustrating an operation method 600 of an electronic device according to various embodiments of the disclosure.

According to various embodiments of the disclosure, in operation 610, an electronic device (e.g., the electronic device 101 in FIG. 1) may transmit a packet to an external electronic device (e.g., the electronic device 104 in FIG. 1) through a base station.

According to various embodiments of the disclosure, the electronic device 101 (e.g., the communication processor 192 in FIG. 3) may receive media data transmitted by an application processor (e.g., the processor 120 in FIG. 1) and convert the received media data into multiple packets. The electronic device 101 may transmit the converted packets to the base station through a wireless communication channel (e.g., Wi-Fi or a cellular network). The base station may transmit the packets transmitted by the electronic device 101 to the external electronic device 104. For example, the electronic device 101 may perform operation 610 by using a media processing unit (e.g., the media processing unit 310 in FIG. 3) implemented (e.g., executed) in the communication processor 192.

According to various embodiments of the disclosure, in operation 620, the electronic device 101 may identify whether there are packets having failed to be transmitted.

According to various embodiments of the disclosure, the communication processor 192 may identify whether an ack signal indicating that multiple packets have been received within a predetermined time is received from a base station, and determine whether transmission of at least some packets fails, based on whether an ack signal is received. For example, the communication processor 192 may identify that at least some packets have failed to be transmitted, in response to failure in receiving an ack signal indicating that multiple packets is received from a base station in a predetermined time or receiving a nack signal indicating that multiple packets are not received from a base station.

According to various embodiments of the disclosure, the communication processor 192 may perform transmission of least some packets multiple times to identify that the transmission has failed. For example, the communication processor 192 may perform transmission of at least some packets multiple times by using various entities (e.g., the MAC entity 340 in FIG. 3) implemented on a user plane protocol (e.g., the user plane protocol 360 in FIG. 3). The communication processor 192 may identify that transmission of at least some packets among multiple packets corresponding to media data has failed, and control the MAC entity 340 to retransmit the packets having failed to be transmitted. The MAC entity 340 may perform retransmission of at least some packets a predetermined number of times until receiving, through a physical layer HARQ indication channel (PHICH), an indicator indicating that the PHY entity 350 has successfully received packets having been primarily retransmitted from the external electronic device 104. In operation 620, the packets having failed to be transmitted may mean a state in which all packet transmission operations performed at least once by using the user plane protocol 360 data have failed.

According to various embodiments of the disclosure, in response to identifying that all transmission have succeeded (operation 620-N), the electronic device 101 may perform an operation of additional transmitting packets or receiving packets from the external electronic device 104.

According to various embodiments of the disclosure, in response to identifying that there are packets having failed to be transmitted, the communication processor 192 may delete at least some packets stored in a buffer related to the MAC entity 340.

According to various embodiments of the disclosure, in operation 630, in response to identifying of a failure in transmitting packets (operation 620-Y), the electronic device 101 may identify state information of a wireless communication channel of a network.

According to various embodiments of the disclosure, the state information of a wireless communication channel of a network may be information related to quality of a wireless communication channel generated between the electronic device 101 and a base station. For example, the state information of a wireless communication channel of a network may include at least a portion of various information (e.g., received signal strength indication (RSSI), a block error rate (BLER), information (e.g., uplink grant information) related to a resource granted to transmit packets, and a buffer status indicator (BSI) which is information indicating a state of a buffer implemented in the MAC entity 340) capable of directly or indirectly indicating quality of a channel generated between the electronic device 101 and a base station. For example, the communication processor 192 may receive the state information of a network from the MAC entity 340 or a PHY entity (e.g., the PHY entity 350 in FIG. 3).

According to various embodiments of the disclosure, in operation 640, the electronic device 101 may determine whether to perform a retransmission operation with respect to the packets having failed, based on a state of a network.

According to various embodiments of the disclosure, a packet to be retransmitted by the communication processor 192 may be some of packets stored in the memory 130 before being transmitted to the user plane protocol 360 before operation 610. Before transmitting a packet to the user plane protocol 360, the media processing unit 310 may store the packet in the memory 130 implemented in the media processing unit 310. The media processing unit 310 may select packets corresponding to determined sequence numbers from among packets stored in the memory 130 and retransmit the selected packets.

According to another embodiment of the disclosure, the packet to be retransmitted by the communication processor 192 may be packets regenerated by a media processing unit 310 after the transmission failed. The media processing unit 310 may receive, from the MAC entity 340, information indicating sequence numbers of the packets having failed to be transmitted, which is identified by the MAC entity 340. The media processing unit 310 may generate or extract packets corresponding to data corresponding to the received sequence numbers.

According to another embodiment, the communication processor 192 may receive an indicator indicating a failure in retransmitting from the MAC entity 340 by using the media processing unit 310 and determine sequence information of the packet having failed to be retransmitted based on the time when the indicator is received. The communication processor 192, for example, may generate or extract packets corresponding the determined sequence numbers by using media processing unit 310.

According to various embodiments of the disclosure, the communication processor 192 may identify a state of a network between the electronic device 101 and the external electronic device 104 based on state information of a network, and in case that retransmission is predicted to be successful, determine to perform retransmission of the packet having failed to be primarily retransmitted. For example, the communication processor 192 may determine to perform retransmission of the packet having failed to be transmitted by using the user plane protocol 360 in response to identifying that a value (e.g., received signal strength indication (RSSI)) indicating a network quality is more than or equal to a predetermined value.

According to various embodiments of the disclosure, in case that retransmission is determined to be successful within a predetermined time, the communication processor 192 determine to perform retransmission with respect to the packet having failed to be transmitted by the user plane protocol 360. The predetermined time may be determined based on remaining capacity of a buffer in which the external electronic device 104 temporarily stores packets having succeeded to be transmitted among packets to be transmitted and a reproduction time of media corresponding to the packet. For example, the communication processor 192 may predict a size of a buffer included in the external electronic device 104 based on state information of a wireless channel of a network. The communication processor 192 may determine a maximum number of packets the buffer may store, based on the predicted remaining capacity of the buffer of the external electronic device 104 and determine whether to perform retransmission based on a result of comparison of the determined number of packets and the number of packets to be retransmitted. For example, in case that the determined number of packets is smaller than the number of packets to be retransmitted, the communication processor 192 may determine to perform retransmission.

According to various embodiments of the disclosure, the communication processor 192 may determine (or predict) a size of a buffer of the external electronic device 104 based on the state information of a network. The communication processor 192 may compare the predicted or determined size of the buffer and the number of packets (or a size of packets) to be secondarily retransmitted and determine to perform secondary retransmission based on a result of the comparison. For example, the communication processor 192 may determine a maximum number of packets the buffer may store, based on remaining capacity of the buffer and determine whether to perform secondary retransmission based on a result of comparison of the determined number of packets and the number of packets to be secondarily retransmitted. For example, in case that the determined number of packets is smaller than the number of packets to be secondarily retransmitted, the communication processor 192 may determine to perform secondary retransmission. In case that the number of packets to be secondarily retransmitted is smaller than the determined number of packets, it may mean that the packets received by the external electronic device 104 through the secondarily retransmission may be stored in the buffer 510, and the external electronic device 104 may perform continuous content output.

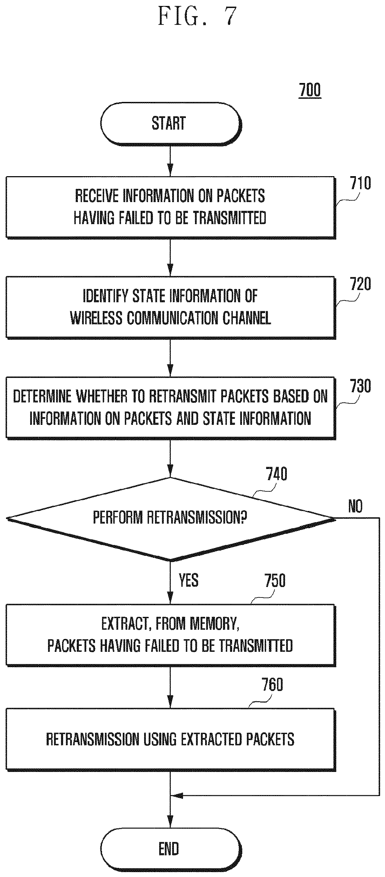

FIG. 7 is an operation flowchart illustrating an operation method of an electronic device according to various embodiments of the disclosure.

Operation 710 to operation 760 in FIG. 7 may be performed by a communication processor (e.g., the communication processor 192 in FIG. 3) of an electronic device (e.g., the electronic device 101 in FIG. 1). FIG. 7 illustrates, for example, an operation in which a media processing unit (e.g., the media processing unit 310 in FIG. 3) implemented (or executed) on the communication processor 192 performs a retransmission operation with respect to packets having failed to be transmitted by using a user plane protocol (e.g., the user plane protocol 360 in FIG. 3).

According to various embodiments of the disclosure, in operation 710, the communication processor 192 may receive, from a MAC entity (e.g., the MAC entity 340 in FIG. 3), information related the packets having failed to be transmitted.

According to various embodiments of the disclosure, in operation 720, the communication processor 192 may identify state information of a wireless communication channel.

According to various embodiments of the disclosure, the state information of a wireless channel of a network may be information related to quality of a channel generated between the electronic device 101 and a base station. For example, the state information of a wireless channel of a network may include at least a portion of various information (e.g., received signal strength indication (RSSI), a block error rate (BLER), information (e.g., uplink grant information) related to a resource granted to transmit packets, a buffer status indicator (BSI) which is information indicating a state of a buffer implemented in the MAC entity 340, and information (e.g., buffer occupation (BO)) indicating occupation rate of an image packet or a voice packet in a transmission buffer implemented in the RLC entity 330) capable of directly or indirectly indicating quality of a channel generated between the electronic device 101 and a base station. The communication processor 192 may receive network state information from the MAC entity 340 or the PHY entity 350.

According to various embodiments of the disclosure, in operation 730, the communication processor 192 may determine whether to perform retransmission of the packets, based on the information on the packets having failed to be transmitted and the state information of the wireless communication channel.

According to various embodiments of the disclosure, the communication processor 192 may identify a state of a network between the electronic device 101 and a base station based on state information of a wireless channel of a network, and in case that retransmission is predicted to be successful, determine to perform retransmission of the packet having failed to be transmitted. For example, in response to identifying that a value (e.g., RSSI) indicating a network quality satisfies a predetermined condition, the communication processor 192 may determine to perform retransmission of the packet having failed to be.

According to an embodiment, the predetermined condition may be a condition related to a block error rate (BLER) of a transmission channel. For example, in response to identifying that a block error rate (BLER) of a transmission channel included in the value indicating network quality is 40% or more and a signal transmission strength is maximum, the communication processor 192 may identify that the value indicating network quality does not satisfy the predetermined condition and determine not to perform packet transmission using the user plane protocol 360.

According to an embodiment, the predetermined condition may be a condition related to a reference signal received power (RSRP) of a reception channel. For example, in response to identifying that a RSRP of a reception channel included in the value indicating network quality is -120 dBm or less, the communication processor 192 may identify that the value indicating network quality does not satisfy the predetermined condition and determine not to perform packet retransmission using the user plane protocol 360.

According to various embodiments of the disclosure, the communication processor 192 may predict a size of a buffer of the external electronic device 104 based on the state information of a wireless channel of a network. The media processing unit 310 may determine a maximum number of packets the buffer may store, based on the predicted remaining capacity of the buffer of the external electronic device 104 and determine whether to perform retransmission based on a result of comparison of the determined number of packets and the number of packets to be retransmitted. For example, in case that the determined number of packets is smaller than the number of packets to be retransmitted, the communication processor 192 may determine to perform retransmission.

According to various embodiments of the disclosure, in operation 750, in response to determining to perform retransmission of the packets (operation 740-Y), the communication processor 192 may extract the packets having failed to be transmitted from a memory (e.g., the memory 130 in FIG. 1).

According to various embodiments of the disclosure, before transmitting packets to the user plane protocol 360, the media processing unit 310 may store the packets in the memory 130 implemented in the media processing unit 310. The media processing unit 310 may extract packets corresponding to determined sequence numbers from among packets stored in the memory 130 and retransmit the extracted packets.

According to various embodiments of the disclosure, in operation 760, the media processing unit 310 may perform a retransmission operation by using the extracted packets. An operation method of an electronic device according to various embodiments of the disclosure may include: an operation of, in responses to identifying a failure in transmitting at least some of the packets among packets generated by a media processing unit implemented in a communication processor to an external electronic device, identifying state information of a network used to retransmit the at least some packets; an operation of determining, based on the state information of the network, whether to retransmit the at least some packets; an operation of generating, based on whether to retransmit the packets, the packets to be retransmitted; and an operation of retransmitting the generated packets.

The operation method of an electronic device according to various embodiments of the disclosure may further include, in response to identifying of a failure in transmitting the packets, an operation of transmitting the packet by using an automatic repeat request (Hybrid-ARQ), and in response to identifying of a failure in transmitting the packets by using the Hybrid-ARQ, an operation of identifying the state information of the network.

The operation method of an electronic device according to various embodiments of the disclosure may further include, in response to identifying that the transmission has failed, an operation of deleting the packets having failed to be transmitted.

In the operation method of an electronic device according to various embodiments, the operation of generating packets to be retransmitted may include an operation of generating the packets to be retransmitted, based on sequence numbers of the packets having failed to be transmitted.

In the operation method of an electronic device according to various embodiments of the disclosure, the operation of generating packets to be retransmitted may further include: an operation of identifying, by a MAC layer, sequence numbers of the packets having failed to be transmitted; and an operation of transmitting, by the MAC layer, the identified sequence numbers to a media processing unit.

In the operation method of an electronic device according to various embodiments of the disclosure, the operation of generating packets to be retransmitted may further include: an operation of transmitting, by the MAC layer to the media processing unit, retransmission failure time information of the packets having failed to be transmitted; and an operation of determining, by the media processing unit, sequence numbers of the packets having failed to be transmitted, based on the failure time information.

In the operation method of an electronic device according to various embodiments of the disclosure, the operation of determining whether to perform retransmission of the at least some packets may include: an operation of determining a size of a buffer implemented in the external electronic device and temporarily storing packets having succeeded to be transmitted among the packets, based on the state information of the network; and an operation of determining whether to retransmit the packets, based on the determined size of the buffer.

The operation method of an electronic device according to various embodiments of the disclosure may further include an operation of determining the number of packets to be retransmitted, based on the determined size of the buffer.

In the operation method of an electronic device according to various embodiments of the disclosure, the operation of identifying state information of a network may include an operation of receiving the state information of the network by the MAC layer or a physical layer (PHY) implemented in the communication processor.

In the operation method of an electronic device according to various embodiments of the disclosure, the state information of the network may be at least one of a block error rate (BLER), uplink (UL) grant information, or a buffer status indicator (BSI).

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101) . For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising a media processing unit configured to generate packets and a communication processor comprising a user plane protocol configured to transmit the packets to an external electronic device,
wherein the communication processor is configured to, in response to identifying of a failure in transmitting at least some of the packets by using the user plane protocol:
identify state information of a network used to retransmit the at least some packets;
based on the state information of the network, determine whether to retransmit the at least some packets; and
based on whether to retransmit the packets, control the media processing unit to generate the packets to be retransmitted.

2. The electronic device of claim 1, wherein the communication processor is configured to:
in response to identifying of a failure in the transmitting the packets, transmit the packets by using an automatic repeat request (Hybrid-ARQ); and
in response to identifying of a failure in transmitting the packets by using the Hybrid-ARQ, identify the state information of the network.

3. The electronic device of claim 1, wherein the communication processor is configured to, in response to identifying of a failure in transmitting the at least some packets, control a MAC layer to delete the at least some packets having failed to be transmitted.

4. The electronic device of claim 1, wherein the communication processor is configured to, based on sequence numbers of the packets having failed to be transmitted, control a media processing unit to generate the packets to be retransmitted.

5. The electronic device of claim 4, wherein the communication processor is configured to:
control the MAC layer to identify sequence numbers of the packets having failed to be transmitted; and
determine the packets to be retransmitted, based on the identified sequence numbers.

6. The electronic device of claim 4, wherein the communication processor is configured to identify the sequence numbers, based on transmission failure time information of the packets having failed to be transmitted.

7. The electronic device of claim 1, wherein the communication processor is configured to:
determine a size of a buffer which is implemented in the external electronic device and configured to temporarily store packets having succeeded to be transmitted among the packets, based on the state information of the network; and
determine whether to retransmit the at least some packets, based on the determined size of the buffer.

8. The electronic device of claim 7, wherein the communication processor is configured to determine the number of the packets to be retransmitted, based on the determined size of the buffer.

9. The electronic device of claim 1, wherein the communication processor is configured to cause a physical layer (PHY) or the MAC layer implemented in the communication processor to receive the state information of the network.

10. The electronic device of claim 1, wherein the state information of the network is at least one of a block error rate (BLER), uplink (UL) grant information, or a buffer status indicator (BSI).

11. An operation method of an electronic device, the method comprising:
in response to identifying of a failure in transmitting at least some of the packets among packets generated by a media processing unit implemented in a communication processor to an external electronic device, identifying state information of a network used to retransmit the at least some packets;
based on the state information of the network, determining whether to retransmit the at least some packets;
based on whether to retransmit the packets, generating the packets to be retransmitted; and
retransmitting the generated packets.

12. The operation method of an electronic device of claim 11 further comprising:
in response to identifying of a failure in the transmitting the packets, transmitting the packets by using an automatic repeat request (Hybrid-ARQ); and
in response to identifying of a failure in transmitting the packets by using the Hybrid-ARQ, identifying the state information of the network.

13. The operation method of an electronic device of claim 11 further comprising, in response to identifying of that the transmission has failed, deleting the packets having failed to be transmitted.

14. The operation method of an electronic device of claim 11, wherein the generating of the packets to be retransmitted comprises generating the packets to be retransmitted, based on sequence numbers of the packets having failed to be transmitted.

15. The operation method of an electronic device of claim 14, wherein the generating of the packets to be retransmitted further comprises:
identifying, by a MAC layer, sequence numbers of the packets having failed to be transmitted; and
transmitting, by the MAC layer, the identified sequence numbers to a media processing unit.
